Europäisches Patentamt

European Patent Office

Office européen des brevets

(19)

(11) Numéro de publication : **0 067 728**
**B1**

(12) **FASCICULE DE BREVET EUROPÉEN**

(45) Date de publication du fascicule du brevet :
18.09.85

(51) Int. Cl.⁴ : **H 01 G  4/38, H 01 G  1/10**

(21) Numéro de dépôt : **82400830.4**

(22) Date de dépôt : **05.05.82**

(54) **Condensateur électrique.**

(30) Priorité : **21.05.81 FR 8110311**

(43) Date de publication de la demande :
**22.12.82 Bulletin 82/51**

(45) Mention de la délivrance du brevet :
**18.09.85 Bulletin 85/38**

(84) Etats contractants désignés :
**BE CH DE GB IT LI NL SE**

(56) Documents cités :
**DE-A- 2 624 724**
**GB-A- 2 007 432**
**US-A- 3 711 746**

(73) Titulaire : **MERLIN GERIN**
**Rue Henri Tarze**
**F-38050 Grenoble Cedex (FR)**

(72) Inventeur : **Benichou, Guy**
**Merlin Gerin**
**F-38050 Grenoble Cedex (FR)**

(74) Mandataire : **Kern, Paul et al**
**Merlin Gerin Sce. Brevets**
**20, rue Henri Tarze F-38050 Grenoble Cedex (FR)**

Jouve, 18, rue St-Denis, 75001 Paris, France

## Description

L'invention est relative à un condensateur électrique basse tension à autocicatrisation ayant plusieurs bobines à axes parallèles disposées en rang à faible écartement et enrobées dans une matière plastique thermo-durcissable pour former un bloc solide isolant, chaque bobine comprenant des rubans de matière synthétique enroulés, dont au moins une des faces est revêtue d'une couche métallique formant une électrode.

Un condensateur de ce type est connu du DE-A-2624724.

Le principal avantage des condensateurs connus du genre mentionné est l'absence de tout liquide d'imprégnation, la matière plastique d'enrobage constituant l'isolation électrique et la protection mécanique des différentes bobines. La matière plastique d'enrobage est une résine thermo-durcissable, par exemple une résine polyuréthane, une résine époxy ou une résine polyester. Un défaut interne du condensateur est éliminé par le phénomène d'autocicatrisation constitué par une évaporation instantanée du dépôt métallique à l'endroit de la perforation de l'isolant ce qui rétablit l'isolement à cet endroit. La fiabilité et la durée de vie de ces condensateurs sont encore augmentées par l'enrobage solide évitant toute pénétration d'humidité ou toute détérioration mécanique des bobines. Dans certaines conditions, notamment après de longues durées d'usage, on a constaté des explosions de condensateurs, vraisemblablement dues à une usure inévitable. Les matières plastiques thermo-durcissables sont cassantes et lors d'une explosion il est difficile d'éviter une dispersion d'éclats particulièrement dangereuse.

La présente invention a pour but de remédier à cet inconvénient, et elle est basée sur la constatation que l'éclatement ou l'explosion d'une bobine de condensateur s'opère toujours suivant la direction axiale. Le condensateur selon l'invention est caractérisé par les particularités mentionnées dans la revendication 1.

Le support assure la double fonction de maintien des bobines dans une position prédéterminée pendant l'opération d'enrobage, et par la suite d'armature de la matière d'enrobage. Cette ossature est en matière plastique présentant une certaine flexibilité pour éviter toute rupture lors d'une explosion, et elle est par exemple réalisée en une matière thermo-plastique. Les deux flasques de l'ossature encadrent les extrémités des différentes bobines, ces flasques étant reliés par des entretoises appartenant à l'ossature et par la matière d'enrobage elle-même, qui pénètre à l'intérieur des noyaux tubulaires des bobines pour constituer des entretoises additionnelles. Il est avantageux de constituer des modules, par exemple de quatre, six ou huit bobines montées sur un même support, plusieurs de ces modules pouvant être enrobées dans un même bloc pour constituer un condensateur de capacité supérieure.

D'autres avantages et caractéristiques ressortiront plus clairement de la description qui va suivre d'un mode de mise en œuvre de l'invention donné à titre d'exemple non limitatif et représenté au dessin annexé, dans lequel :

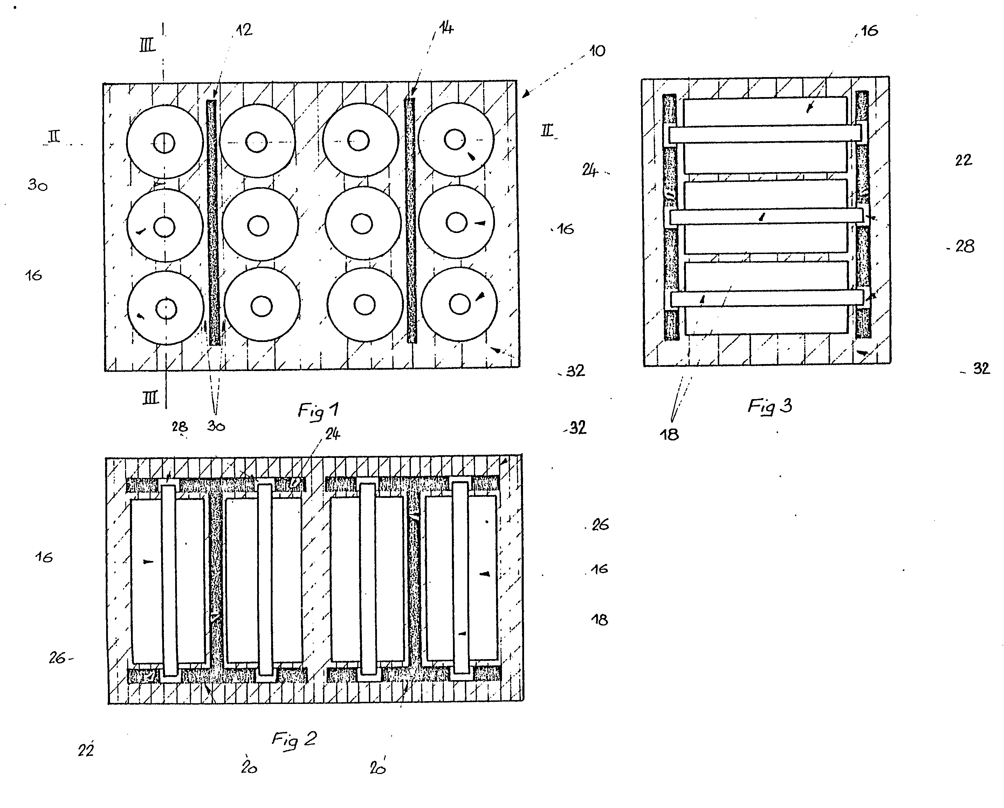

la figure 1 est une vue schématique en coupe axiale selon la ligne I-I de la figure 2, d'un condensateur selon l'invention ;

la figure 2 est une coupe suivant la ligne II-II de la figure 1 ;

la figure 3 est une coupe suivant la ligne III-III de la figure 1.

Sur les figures, un bloc condensateur 10 comporte deux modules 12, 14, chacun constitué de six bobines 16. Chaque bobine 16 comporte un noyau en forme de tube 18 sur lequel sont enroulés deux rubans ou feuilles en matière synthétique, notamment en polypropylène, chaque ruban étant revêtu sur l'une de ces faces d'une couche métallique en zinc ou en aluminium. Les bobines 16 sont connectées électriquement entre elles et à des bornes (non représentées) de sortie du condensateur.

Chaque module 12, 14 comporte un support 20 en forme de I présentant deux flasques 22, 24 reliés par une âme 26. Entre les flasques 22, 24 et de part et d'autre de l'âme 26 sont disposées six bobines 16 en deux colonnes parallèles. Les noyaux tubulaires 18 des bobines 16 s'encliquètent dans des orifices 28 ménagés dans les flasques 22, 24, de manière à supporter et à positionner les bobines 16 avant leur enrobage de la manière décrite ci-dessous. Les bobines 16 sont disposées pour aménager, d'une part entre deux bobines adjacentes et d'autre part entre une bobine et l'âme 26, des intervalles 30, permettant une pénétration de la matière plastique d'enrobage. Le support ou ossature 20 est une pièce moulée en matière thermo-plastique présentant une certaine flexibilité ou élasticité. Cette flexibilité facilite l'encliquetage des noyaux 18 par déformation des flasques 22, 24, et permet la retenue des éclats en cas d'explosion de la manière décrite ci-dessous. L'écartement entre les flasques 22, 24 est légèrement supérieur à la longueur des bobines 16, les noyaux 18 de ces dernières faisant saillie des deux faces terminales des bobines 16.

Dans l'exemple illustré par les figures, le condensateur 10 comporte deux modules 12, 14, placés côte à côte, et enrobés en un seul bloc par une matière plastique d'enrobage 32. L'enrobage s'effectue de la manière usuelle en disposant les modules 12, 14 dans un moule (non représenté) et en injectant une matière plastique thermo-durcissable, de manière à remplir l'ensemble du moule et à enrober les bobines 16 et les supports 20. Le procédé d'enrobage, qui ne fait pas partie de la présente invention, peut bien entendu comporter des opérations usuelles de séchage, de chauffage et de mise sous vide du moule, ou toute autre opération complémentaire. La matière thermo-durcissable 32 est par exemple une résine polyuréthane, une résine polyester ou une résine époxy. Après solidification de la matière thermo-durcissable 32 et démoulage, le condensateur 10 se présente sous la forme d'un bloc solide dont tous les interstices sont remplis de matière plastique. La matière plastique 32 a notamment pénétré à l'intérieur des noyaux 18 en passant par les ouvertures 28 ménagées dans les flasques 22, 24 pour constituer des tiges formant entretoises entre les flasques 22, 24. Les flasques 22, 24 peuvent présenter des lumières (non représentées) facilitant l'accès de la matière d'enrobage 32 dans les zones intercalaires des bobines 16.

Des condensateurs de puissance basse tension ainsi réalisés sont particulièrement compacts et robustes, toutes les parties fragiles étant enrobées dans la matière plastique d'enrobage 32. Un court-circuit entre spires adjacentes d'une bobine 16 est éliminé automatiquement par l'évaporation de la couche métallique dans la zone du court-circuit par un échauffement localisé d'une manière bien connue en soi. Dans le cas d'une explosion due à une pression interne engendrée par un court-circuit, qui n'a pas été éliminé par autocicatrisation, la matière thermo-durcissable 32 se fragmente, mais on constate que les éclats sont retenus par les ossatures 20 de support des bobines 16. Les forces d'éclatement d'une bobine défaillante s'exercent axialement et sont reprises par les flasques 22, 24 encadrant la bobine, ces flasques étant solidarisés par l'âme 26 et les entretoises constituées par les noyaux des bobines adjacentes. La flexibilité de la matière plastique constitutive des ossatures 20 évite toute rupture ou tout au moins limite les ruptures, de manière à conserver un lien entre les éclats de la matière d'enrobage 32. Les ossatures 20 réalisent la double fonction de support des bobines préalablement et pendant la phase d'enrobage et par la suite de dispositif de sécurité en cas d'explosion du condensateur.

Il est clair que les bobines 16 et les ossatures 20 peuvent être d'une structure différente, chaque module comportant un nombre quelconque de bobines. Le bloc condensateur 10 peut être utilisé à l'état brut ou être logé dans un boîtier isolant ou conducteur éventuellement associé à d'autres blocs.

## Revendications

1. Condensateur électrique basse tension à autocicatrisation ayant plusieurs bobines (16) à axes parallèles disposées en rang à faible écartement et enrobées dans une matière plastique (32) thermo-durcissable pour former un bloc solide isolant, chaque bobine (16) comprenant des rubans de matière synthétique enroulés, dont au moins une des faces est revêtue d'une couche métallique formant une électrode, caractérisé en ce que les bobines (16) sont montées sur un support (20) pour former un élément modulaire, ledit support comprenant deux flasques (22, 24) s'étendant perpendiculairement aux axes (18) des bobines, lesdits flasques encadrant les bobines (16) supportées et étant reliés entre eux par des entretoises (26) et en ce que ledit support (20) est noyé dans la matière plastique (32) d'enrobage pour former une armature de retenue d'éclats en cas d'explosion.

2. Condensateur électrique selon la revendication 1, caractérisé en ce que lesdits flasques (22, 24) sont ajourés pour faciliter la pénétration de la matière plastique entre les bobines (16) lors de l'enrobage et à accroître la liaison entre les flasques et la matière d'enrobage.

3. Condensateur électrique selon la revendication 1 ou 2, caractérisé en ce que ledit support (20) est en une matière plastique.

4. Condensateur électrique selon la revendication 1, 2 ou 3, caractérisé en ce que le noyau (18) des bobines (16) est de forme tubulaire et que lesdits flasques (22, 24) présentent des orifices (28) en regard desdits noyaux de façon que la matière d'enrobage remplissant les noyaux constituent des entretoises des flasques.

5. Condensateur électrique selon la revendication 1, 2, 3 ou 4, caractérisé en ce que lesdits rubans sont en polypropylène.

## Claims

1. Electrical low-voltage self-healing capacitor comprising several coils (16) with parallel axes arranged in a line with small distance and embedded in a thermo-hardening plastic material (32) in order to constitute a solid insulating unit, each coil (16) comprising rolled ribbons of synthetic material at least one face of which is covered by a metallic layer constituting an electrode, characterized in that the coils (16) are mounted on a support (20) to constitute a modular element, said support comprising two shields (22, 24) extending perpendicularly to the axes of the coils, said shields enclosing the supported coils (16) and being connected together by spacers (26), and in that the said support (20) is embedded in the plastic coating material (32) to constitute an armature for retaining the splinters in the event of an explosion.

2. Electrical capacitor, characterized in that said shields (22, 24) are perforated in order to facilitate the penetration of the plastic material between the coils (16) during the impregnation and to increase the connection between the shields and the impregnation material.

3. Electrical capacitor according to claim 1 or 2, characterized in that said support (20) is of plastic material.

4. Electrical capacitor according to claim 1, 2 or 3, characterized in that the core (18) of the coils (16) has a tubular shape and that said shields (22, 24) comprise openings (28) facing said cores in such a manner that the coating material filling the cores constitutes the spacers of the shields.

5. Electrical capacitor according to claim 1, 2, 3 or 4, characterized in that said ribbons are of polypropylene.

**Patentansprüche**

1. Elektrischer selbstheilender Niederspannungs-Kondensator mit mehreren parallele Achsen besitzende Spulen (16), die mit geringem Abstand in einer Reihe angeordnet sind, und die von einer thermo-härtenden Kunststoffmasse (32) umhüllt sind, um einen festen Isolierblock zu bilden, wobei jede Spule (16) aufgerollt Bänder aus Plastikmaterial aufweist, von denen mindestens eine Seite mit einer eine Elektrode bildenden Metallschicht beschichtet ist, dadurch gekennzeichnet, dass die Spulen (16) auf einem Träger (20) angeordnet sind, um ein modulares Element zu bilden, wobei der genannte Träger zwei Flansche (22, 24) aufweist, die sich senkrecht zu den Achsen (18) der Spulen erstrecken, und die die getragenen Spulen (16) umrahmen, wobei sie untereinander durch Stege (26) verbunden sind, und dass der genannte Träger (20) in der Umhüllungs-Kunststoffmasse (32) eingebettet ist, um einen Rahmen zum Zurückhalten von Splittern im Falle einer Explosion zu bilden.

2. Elektrischer Kondensator gemäss Anspruch 1, dadurch gekennzeichnet, dass die genannten Flansche (22, 24) mit kleinen Öffnungen versehen sind, um beim Umhüllen das Eindringen der Kunststoffmasse zwischen die Spulen (16) zu erleichtern und die Verbindung zwischen den Flanschen und dem Umhüllungsmaterial zu verstärken.

3. Elektrischer Kondensator gemäss Anspruch 1 oder 2, dadurch gekennzeichnet, dass der genannte Träger (20) aus einem Kunststoffmaterial besteht.

4. Elektrischer Kondensator gemäss Anspruch 1, 2 oder 3, dadurch gekennzeichnet, dass der Kern (18) der Spulen (16) rohrförmig ist, und dass die genannten Flansche (22, 24) gegenüber den genannten Kernen Öffnungen aufweisen, so dass das/das die Kerne füllende Umhüllmaterial die Stege der Flanschen bildet.

5. Elektrischer Kondensator gemäss Anspruch 1, 2, 3 oder 4, dadurch gekennzeichnet, dass die genannten Bänder aus Polypropylen sind.

0 067 728

Fig 1

Fig 2

Fig 3